# EUROPEAN PATENT APPLICATION

(11) **EP 1 733 649 A1**
(43) Date of publication of application: **20.12.2006**
(21) Application number: 05012898.2
(22) Date of filing: 15.06.2005
(51) Int. Cl.: A47C 7/46, B60N 2/66

(54) **Guiding element, support assembly and corresponding seat structure**

(71) Applicant: L&P Swiss Holding Company, 9303 Wittenbach (CH)
(72) Inventor: Samain, Maxime, 8870 Izegem (BE)
(74) Representative: Banzer, Hans-Jörg

(57) **Abstract**

A guiding element for attaching a cable having a sleeve (2) and a wire (3) running in the sleeve (2) to a seat frame is provided, said guiding element (1) comprising first coupling means (4) for coupling the guiding element (1) with the seat frame (10), second coupling means (5) for coupling said guiding element (1) with said cable, said second coupling means (5) comprising an abutting area (9) against which an end of said sleeve (2) abuts when said cable is coupled with the guiding element (1), and guiding means (6, 8) for guiding said wire extending from said abutting area. Such a guiding element (1) may be used to guide said cable around a seat frame for adjusting a lumbar support structure.

## Description

The present invention relates to a guiding element for attaching a cable having a sleeve, a sheath or similar and a wire running in the sleeve to a seat frame, a support assembly, in particular a lumbar support assembly incorporating the guiding element and to a corresponding seat structure. In particular, the present invention relates to a guiding element for use in a support assembly comprising a support structure, for example a support structure having two lateral side members, for example two lateral side wires, and a plurality of transverse members, preferably transverse wires, which extend between the two side members so as to provide load bearing support for upholstery of a seat.

Lumbar support assemblies of the afore-mentioned kind are very well-known and may have various configurations determined by the design of a seat in which the support assembly is to be mounted (see WO 95/00039 A, for example).

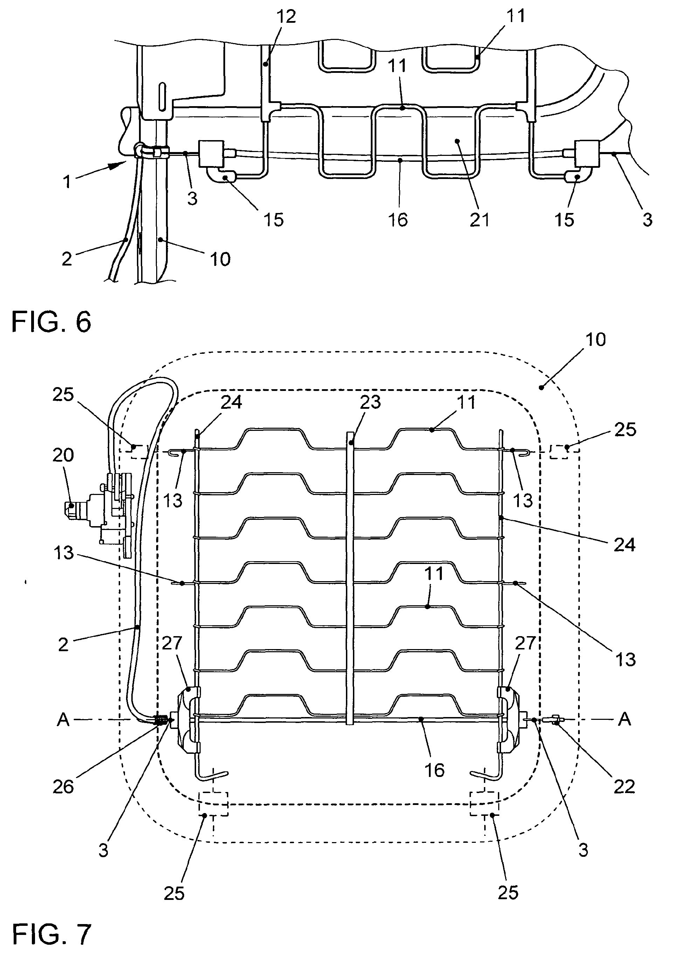

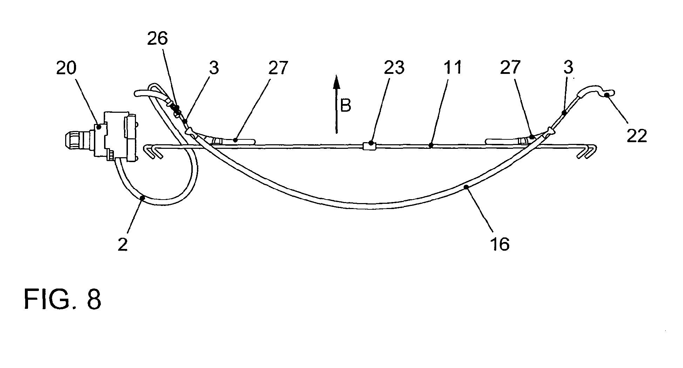

A known lumbar support assembly is also shown in Figs. 7 and 8, Fig. 8 showing a sectional view of the support assembly of Fig. 7 along a line A-A.

The lumbar support assembly shown in Figs. 7 and 8 comprises a support structure having lateral side wires 24 and a plurality of transverse wires 11 running between the lateral side wires 24. Some of the transverse wires 11 have extensions 13 extending beyond the lateral side wires 24, some of which in turn end in hook-like fingers. Also, the lateral side wires 24 have hook-like ends at their lower portions in Fig. 7. The hook-like fingers or ends may be used to suspend the support structure in a seat frame 10 with the help of springs 25.

Furthermore, the support structure also has an intermediate vertical cord 23 which may be formed of paper or synthetic plastic material which serves to provide some degree of stabiiity to the wire framework comprising the two lateral side wires 24 and the transverse wires 11 and to maintain a predetermined vertical spacing between the transverse wires 11.

Furthermore, the lumbar support assembly shown in Figs. 7 and 8 comprises an adjustment mechanism for adjusting in particular the lower part of the support structure shown in Fig. 7.

These adjustment means comprise an actuator 20, a Bowden cable having a sleeve or conduit 2 and a wire 3 running inside the sleeve 2, an additional sleeve 16, attachment means 27 for attaching the Bowden cable to the lateral side wires 24, further attachment means 22 for attaching an end of the wire 3 to the seat frame 10 and a spring 26 for attaching an end of the sleeve 2 where the cable 3 exits the sleeve to the seat frame 10.

The additional sleeve 16 abuts with its end against the attachment means 27.

The functioning of the adjustment means may be best understood with reference to Fig. 8. When the wire 3 is shortened using the actuator 20, for example by winding the wire 3 onto a spool or the like, since the length of the additional sleeve 16 remains constant, the support structure, i.e. the transverse wires 11 and the lateral side wires 24 near the attachment means 27, are pushed and/or pulled in the direction indicated by an arrow B in Fig. 8. This direction corresponds, in use, to a front side of the support structure, "front side" in the context of this specification generally designating the side of the support structure close to a back of an occupant of a corresponding seat, while "back side" refers to the side of the support structure away from the occupant's back.

Therefore, with the support assembly shown in Fig. 7 and 8, the lower part of the support structure which corresponds to a lumbar region of the occupant may be adjusted according to the occupant's wishes to provide maximum comfort.

As can be easily seen in Fig. 8, the maximum travel for the adjustment mechanism is provided when the further attachment means 22 and the spring 26 are fixed at the front side of the seat frame, while the support structure at least in the region to be adjusted is fixed or held (for example by springs 25 or by foam or other material inside the seat) at the back side of the seat frame or is moved to the back side of the seat frame under the weight of an occupant of the seat.

On the other hand, it is usually not possible to accommodate the actuator 20 on the front side of the seat frame as this would mean discomfort to an occupant of the seat. Therefore, the actuator 20 is usually located outside of the seat frame. Consequently, it is necessary to guide the Bowden cable to the spring 26 located at the front side of the seat frame. Usually, this achieved by providing a hole in the seat frame through which the Bowden cable is guided, which may lead to sharp bends of the cable, lessening the durability of the cable. Furthermore, also the spring 26 used for attachment in Fig. 8 may be a weak point during long-term use.

Therefore, it is an object of the present invention to provide a guiding element for attaching a cable having a sleeve and a wire running in the sleeve to a seat frame, wherein this guiding element allows an easy and durable fixation of the cable to the seat frame and furthermore guides the cable such that excessive stress due to sharp bends is avoided.

This object is achieved by a guiding element as defined by claim 1. The dependent claims define preferred or advantageous embodiments of the present invention. Furthermore, a support assembly incorporating the guiding element according to claim 8 and a corresponding seat structure according to claim 13 are defined.

According to the present invention, a guiding element for attaching a cable having a sleeve and a wire running in the sleeve to a seat frame is provided, wherein said guiding element comprises first coupling means for coupling the guiding element with the seat frame, second coupling means for coupling said guiding element with said cable, said second coupling means comprising an abutting area against which an end of said sleeve abuts when said cable is coupled with the guiding element through said second coupling means, and guiding means for guiding said wire.

With such a guiding element, the cable may be easily fixed to the seat frame with high stability.

The guiding means may be designed in an arc shape to guide the wire from a back side or a side portion of said seat frame to a front side of said seat frame, front side designating the side of the seat frame closest to the back of an occupant occupying a seat having said seat frame. In particular, with such an arc shape the wire may be guided around the seat frame. The arc shape preferably has a radius of curvature which presents excessive stress on the cable, e.g. a radius of curvature greater than 5 mm.

The arc shape may also form at least part of the first coupling means to attach the guiding element to the seat frame in a ciip-iike manner. Furthermore, the first coupling means may comprise an opening through which a screw or other fastening means may be guided to fix the guiding element to the seat frame. As a matter of course, these two possibilities may be used separately or in combination.

A lumbar support structure according to the present invention comprises an actuator, said guiding element, a support structure, preferable a support structure having lateral side members and transverse members, a cable coupled with the guiding element, the wire of said cable extending from said guiding element and being coupled through attachment means with said support structure.

Said attachment means comprise clips between which a further sleeve for said wire extends. With such a support assembly, the support assembly may be easily fixed to a seat frame and adjusted with the actuator.

In the following, a preferred embodiment of the present invention will be explained in detail with reference to the drawings.

Fig. 1 shows a perspective view of a guiding element according to a preferred embodiment of the present invention.

Fig. 2 shows a partial cross-section of the guiding element of Fig. 1.

Fig. 3 shows the guiding element of Fig. 1 attached to a seat frame.

Fig. 4 shows a lumbar support assembly incorporating the guiding element of Fig. 1.

Fig. 5 shows plate clips used in Fig. 4 for attaching a cable to a support structure.

Fig. 6 shows an enlarged view of the lower part of the support structure of Fig. 4 attached to a seat frame.

Fig. 7 shows a known lumbar support assembly.

Fig. 8 shows a cross-sectional view along a line A-A of Fig. 7.

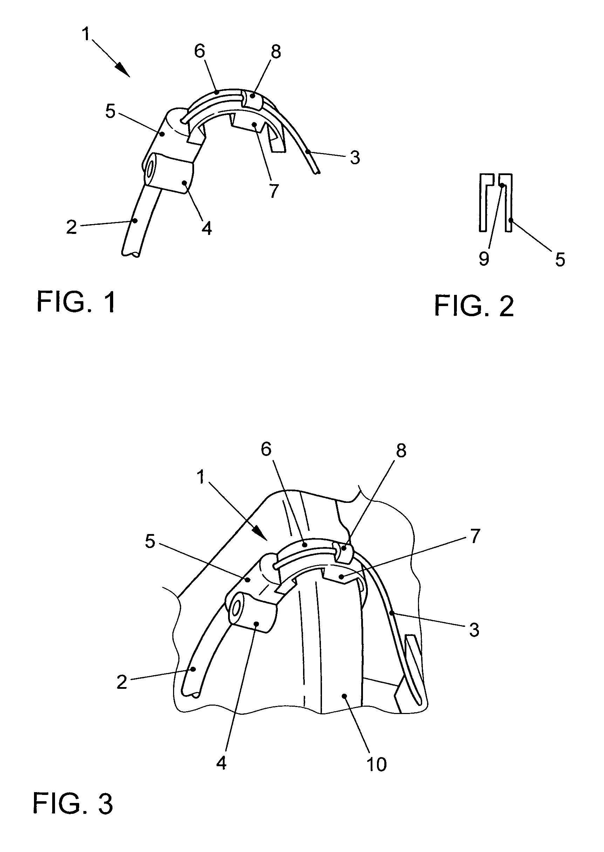

In Fig. 1, a perspective view of a guiding element according to a preferred embodiment of the present invention is shown. The guiding element 1 comprises arc-shaped guiding means 6, first coupling means 4 and second coupling means 5.

The first coupling means 4 are designed to have cylindrical shape and have a through hole in the middle of the cylinder through which a screw, a rivet or the like may be guided for attaching the guiding element 1 to a seat frame of a seat. Said second coupling means 5 also have an cylindrical outer shape. The cross-section of said second coupling means 5 is shown in Fig. 2. The second coupling means 5 have a through hole in line with the axis of the cylinder defined by its outer shape, said through hole narrowing at a step 9. The second coupling means 5 serve to couple the guiding element 1 with a cable like a Bowden cable having a sleeve 2 and a wire 3 running in the sleeve 2. When the cable is inserted into the second coupling means 5, an end of the sleeve 2 abuts against the step 9, and the wire 3 exits through the smaller diameter portion of the through hole of the second coupling means 5, the larger diameter portion having a diameter corresponding to the outer diameter of sleeve 2 and the smaller diameter portion having a diameter corresponding to the diameter of wire 3.

Said guiding means 6 have an arc shape as shown in Fig. 1 and serves to smoothly guide the wire 3 exiting from the second coupling means 5 along a curve corresponding to the arc shape. For securely guiding the wire 3, a cylinder 8 may be incorporated into the guiding means 6, said cylinder 8 having a through hole through which the wire 3 is guided. Furthermore, said guiding means 6 may have a groove for holding the wire 3 in place. The radius of curvature of the arc shape when mounted is preferably at least 5 mm, more preferably at least 7 mm, so that no significant bending stress is exerted on the cable.

Furthermore, the guiding means 6 have extensions 7 at their inner side. Said extensions 7 serve to position the guiding means 6 relative to a corresponding seat frame. In this respect, it should be noted that the guiding means 6 generally have some degree of flexibility, which, on the one hand, makes it possible to use the same guiding element for seat frames having different sizes and, on the other hand, allows a "dipping" of the guiding element 1 onto a seat frame as described below.

Fig. 3 shows the guiding element 1 attached to a corresponding seat frame 10. In particular, the guiding element 1 is arranged such that the first coupling means 4 and the second coupling means 5 are arranged at a back side of the seat frame, whereas guiding means 8 go around a side portion of the seat frame 10. "Back side" in this respect refers to the side of the seat frame which is away from an occupant's back when said occupant is occupying the seat, whereas "front side" in the following will be used to refer to the side of the seat frame closer to the occupant's back. As can be seen in Fig. 3, with the guiding element of the present invention, the cable and in particular the wire 3 of the Bowden cable may be smoothly guided from the back side of the seat frame 10 to the front side of the seat frame 10 without being bent sharply and without needing a through hole in the seat frame itself.

It should be noted that, as also can be taken from Fig. 3, the extensions 7 of the guiding means 6 serve to position the guiding means 6 and thus the guiding element 1 around the side portion of the seat frame and thus, together with the first coupling means 4, serve to securely hold the guiding element 1 in place.

It should be noted that through the extensions 7 the radius of curvature of the arc-shaped guiding means 6 is increased compared to the radius of curvature of the seat frame 10. If the radius of curvature of the seat frame 10 is sufficiently larger, the extensions 7 may be omitted.

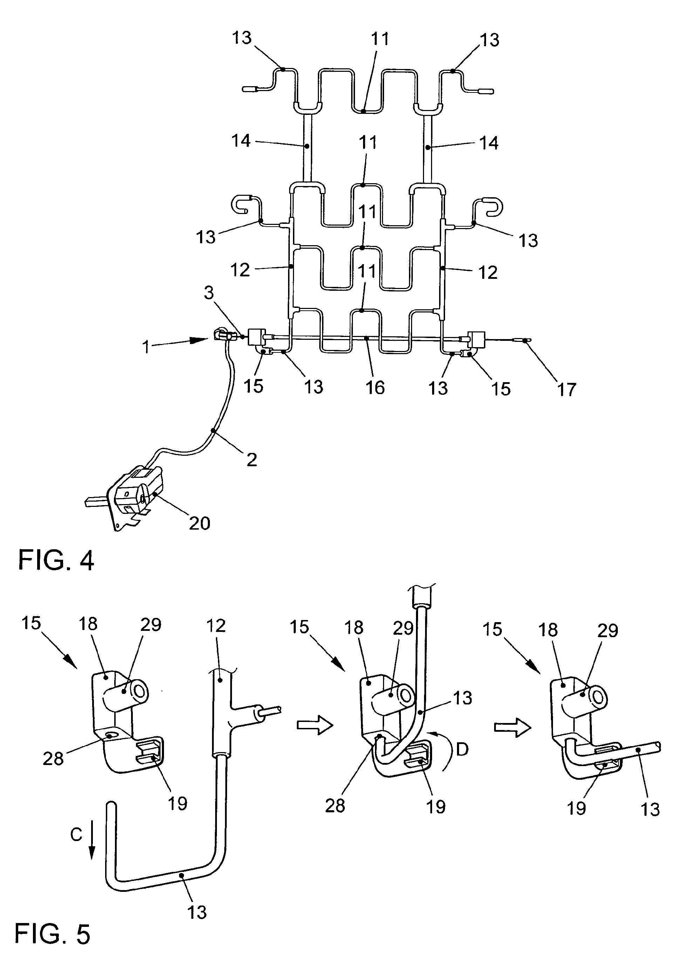

In Fig. 4, a lumbar support assembly comprising the guiding element 1 described with reference to Figs. 1-3 is shown. Furthermore, the lumbar support assembly shown in Fig. 4 comprises a support structure having a plurality of transverse wires 11 and moulded lateral side members 12, 14 connecting the transverse wires 11. The lateral side members 12, 14 may be made of a plastic material. However, also lateral side wires as already described with reference to Fig. 7 in the introductory portion or any other kind of support structure may be used.

The transverse wires 11 have end portions 13 extending beyond the lateral side members 12, 14. These end portions 13 may end in hook-like fingers with the help of which the support structure may be attached to a seat frame, for example by using springs as described in the introductory portion, or they may end straight.

At the end portions 13 of the bottom-most transverse wire 11, attachment means in the form of plate clips 15 made from a plastic material are attached. These plate clips will be described later in greater detail.

The wire 3 exiting from the guiding element 1 runs through the plate clips 15 and ends in an end portion 17 which is adapted to be fixed to a seat frame. Between the plate clips 15, a further sleeve 16 similar to the sleeve 2 is located inside which the wire 3 runs.

An actuator 20 is provided for shortening an lengthening the wire 3, for example by winding the wire 3 onto a spool and by unwinding the wire 3 from the spool, respectively. Such actuators are well-known in the art and need not be described in detail.

The plate clips 15 and the further sleeve 16 running between the plate clips 15 basically serve the same function as the further sleeve 16 and the attachment means 27 of Figs. 7 and 8.

In Fig. 5, the plate clips 15 and the method for fixing them to the extensions 13 of the bottom-most transverse wire 11 of Fig. 4 are shown in Fig. 5, wherein from left to right three stages of fixing the plate clips 15 to the extensions 13 are shown.

The plate clips 15 comprise a body 18 and an extension 19 having vertical walls designed to be clipped on the extensions 13. The body 18 has a hole 28 adapted to accommodate an end of the extension 13. As shown in the left-most part of Fig. 5, the plate clip 15 is pushed onto the end of the extension 13 in the direction of an arrow C so that the end of the extension 13 is situated in the hole 28. As shown in the middle part of Fig. 5, the plate clip is rotated as indicated by an arrow D so that the vertical walls of the end portion 19 engage a corresponding portion of the extension 13. The final state is shown to the right in Fig. 5, where the plate clip 15 is securely fixed to the extension 13.

Furthermore, the plate clips 15 comprise a portion 29 which has a through hole perpendicular to the hole 28. The cross-section of the portion 29 is similar to the cross-section of the second coupling means 5 of the guiding element 1 shown in Fig. 2 and comprises a step against which the further sleeve 16 of Fig. 4 abuts. Therefore, pressure may be transmitted form the further sleeve 16 to the plate clips 16 and therefore to the support structure.

In Fig. 6, the lower part of the support structure of Fig. 4 together with the guiding element is shown as attached to the seat frame 10. In particular, the guiding element is fixed to seat frame 10 as already described with reference to Fig. 3, and the end portion 17 of the wire 3 is fixed to an opposing lateral side of the seat frame, for example by anchoring the end portion 17 in a hole 22. As can be seen, the seat frame furthermore comprises a transverse element 21.

The operation of the arrangement shown in Fig. 6 is similar to one already described with reference to Figs. 7 and 8 in the introductory portion: when the wire 3 is shortened, the plate clips 15 and thus the support structure are pushed by the further sleeve 16 towards a front side of the seat frame, thus providing adjustable support to a lumbar portion of an occupant of the respective seat. However, a similar mechanism may be provided for other regions than the lumbar region.

The guiding element 1 is easy to fix to the seat frame and provides a smooth guiding for the wire 3 around the seat frame so that no hole in the seat frame is needed. Furthermore, sharp bendings of the wire 3 are avoided. The actuator for actuating the adjusting mechanism may be placed beside or at a back side of the seat frame. Furthermore, the guiding element 1, which may be made of plastic in one piece or may comprise metal parts, provides a durable attachment with good long-term stability.

It should be noted that the exact shape of the guiding elements and the positioning of its first coupling means, second coupling means and guiding means may be varied depending on the actual seat structure it is intended for. In particular, with a modification of the guiding means of the guiding element of the present invention, it is possible not only to guide a wire from a back side of the seat frame to a front side thereof, but also to guide a wire coming from a top side or a bottom side to the front side or any other desired location.

## Claims

1. Guiding element (1) for attaching a cable having a sleeve (2) and a wire (3) running in the sleeve (2) to a seat frame (10), said guiding element comprising
first coupling means (4, 7) for coupling the guiding element (1) with the seat frame (10),
second coupling means (5) for coupling said guiding element (1) with said cable, said second coupling means (5) comprising an abutting area (9) against which an end of said sleeve (2) abuts when said cable is coupled with the guiding element (1), and
guiding means (6, 8) for guiding said wire (3) exiting from said sleeve (2) at said abutting area (9).

2. The guiding element (1) according to claim 1,
**characterized in that**
said guiding means (6, 8) comprise an arc-shaped element (6) adapted to guide said wire (3) around a side portion of said seat frame (10) to a front side of said seat frame (10).

3. The guiding element (1) according to claim 1 or claim 2,
**characterized in that**
said guiding means (6, 8) comprises a through hole adapted to accommodate the wire (3).

4. The guiding element (1) according to any one of the preceding claims,
**characterized in that**
said first coupling means (4, 7) comprise at least one extension (7) for positioning the guiding element (1) relative to the seat frame (10).

5. The guiding element (1) according to any one of the preceding claims,
**characterized in that**
said first coupling means (4, 7) comprise a through hole for accommodating a fastening means for fastening the guiding element to said seat frame.

6. The guiding element according to claim 5,
**characterized in that**
said fastening means comprise a screw or a rivet.

7. The guiding element (1) according to any one of the preceding claims,
**characterized in that**
said second coupling means comprise a through hole having a first diameter corresponding to the outer diameter of said sleeve (2) at one end and a second diameter corresponding to the outer diameter of said wire (3), said abutting area being formed as a step (9) narrowing said through hole from said first diameter to said second diameter.

8. Support assembly for a seat, comprising:
a support structure (11, 12, 13, 14) to be accommodated in said seat,
a cable having a sleeve (2) and a wire (3) running in said sleeve,
an actuator (20) for reversibly shortening said wire (3),
the guiding element (1) according to any one of the preceding claims for attaching said cable to a seat frame of said seat such that said sleeve (2) ends at said guiding element (1) and said wire further extends from said guiding element (1), and
coupling means (15) for coupling said wire (3) with said support structure (11,12, 13, 14).

9. The support assembly according to claim 8,
**characterized in that** said attachment means comprises two attachment elements (15) coupled with the support structure at opposing lateral sides thereof.

10. The support assembly according to claim 9,
**characterized in that**
the support assembly comprises a further sleeve (16) surrounding said wire (3) between said attachment elements.

11. Support assembly according to any one of claims 8-10,
**characterized in that**
said attachment means comprises at least one attachment element (15) which is designed to be attachable to said support structure by clipping said element on a wire of said support structure, said element further comprising a through hole for guiding said wire.

12. Support assembly according to claims 9 and 10,
**characterized in that**
said through hole comprises a step against which said further sleeve (16) abuts.

13. Seat structure comprising a seat frame (10, 21) and a support assembly according to any one of claims 8-12,
wherein said guiding element (1) of said support assembly is coupled with a first lateral side portion of said seat frame and an end portion (17) of said wire (3) of said support assembly is coupled with a second lateral side portion of said seat frame (10) opposing said first lateral side portion.
